(19) **Europäisches Patentamt**

**European Patent Office**

**Office européen des brevets**

(11) **EP 0 692 683 B1**

(12) **EUROPEAN PATENT SPECIFICATION**

(45) Date of publication and mention
of the grant of the patent:
**17.10.2001 Bulletin 2001/42**

(51) Int Cl.7: **F24F 11/00**, F25B 13/00,
F25B 49/02

(21) Application number: **95110843.0**

(22) Date of filing: **11.07.1995**

(54) **Air conditioning apparatus having an outdoor unit to which a plurality of indoor units are connected**

Klimaanlage mit einer Ausseneinheit die mit verschiedenen Inneneinheiten verbunden ist

Dispositif de conditionnement d'air avec une unité à l'extérieur connectée à plusieurs unités à l'intérieur

(84) Designated Contracting States:
**FR GB IT**

(30) Priority: **14.07.1994 JP 16231994**

(43) Date of publication of application:
**17.01.1996 Bulletin 1996/03**

(73) Proprietor: **KABUSHIKI KAISHA TOSHIBA**
**Kawasaki-shi, Kanagawa-ken 210-8572 (JP)**

(72) Inventors:
• **Hasegawa, Norihisa,**
**c/o Intellectual Property Div.**
**Minato-ku, Tokyo 105 (JP)**

• **Ueno, Kiyotaka, c/o Intellectual Property Div.**
**Minato-ku, Tokyo 105 (JP)**

(74) Representative: **Henkel, Feiler, Hänzel**
**Möhlstrasse 37**
**81675 München (DE)**

(56) References cited:
**US-A- 4 926 653**        **US-A- 5 009 078**
**US-A- 5 050 396**

**Description**

The present invention relates to a multiple air conditioning apparatus capable of air-conditioning a plurality of rooms.

An air conditioning apparatus of a multiple type in which a plurality of indoor units are connected to an outdoor unit, can air-condition a plurality of rooms, and such an apparatus is equipped in, for example, a building having a great number of rooms.

The outdoor unit has a compressor and an outdoor heat exchanger, and the plurality of indoor units each have a flow controlling valve and an indoor heat exchanger. The compressor, the outdoor heat exchanger, each flow controlling valve and each indoor heat exchanger are connected in series by piping, thus forming a refrigeration cycle.

In each of the indoor units, the opening of the flow controlling valve is controlled in accordance with the difference between the temperature of the indoor air and a predetermined value. As the opening is controlled, the amount of refrigerant flowing to each indoor heat exchanger is adjusted. Furthermore, a command corresponding to the difference between the temperature of the indoor air and the predetermined value is sent from each indoor unit to the outdoor unit. In the outdoor unit, the capacity of the compressor is controlled in accordance with a command sent from each indoor unit.

In the multiple air conditioning apparatus, the length of the piping of the outdoor unit is different from that of each indoor unit. Further, the height of the outdoor unit is different from that of each indoor unit. The length of the piping and the height of each unit are not known until the installment of the whole apparatus is completed.

Consequently, it is difficult to provide an appropriate amount of refrigerant to each indoor unit, by simply adjusting the opening of the flow controlling valve in accordance with the temperature of the room and the predetermined value.

An air conditioning apparatus according to the precharacterizing part of claim 1 is known from US-A-5 050 396. According to this document the total cooling capability requested from one or a plurality of indoor units is compared with a total heating capability requested from one or a plurality indoor units to set a cooling or heating operating mode.

The object of the present invention is to provide an air conditioning apparatus in which an appropriate amount of refrigerant is supplied to each of the indoor units regardless of the length of the piping connecting the outdoor unit to each indoor unit, or the height positions of the outdoor unit and each indoor unit.

According to the present invention, there is provided an air conditioning apparatus in which a plurality of indoor units are connected to an outdoor unit, the apparatus characterized by comprising:

a compressor, provided in the outdoor unit, for discharging a refrigerant;

an outdoor heat exchanger provided in the outdoor unit;

a plurality of flow controlling valves, provided in each of the plurality of indoor units, for controlling a flow of the refrigerant by changing an opening of each valve;

a plurality of indoor heat exchangers each provided in each of the plurality of indoor units;

a refrigeration cycle for connecting the compressor, the outdoor heat exchanger, each of the plurality of flow controlling valves, and each of the plurality of indoor heat exchangers through each other, for circulation of the refrigerant;

temperature sensor, provided in each of the plurality of indoor units, for detecting a temperature of indoor air;

operating unit, provided in each of the indoor units, for setting a set value for the temperature of the indoor air;

opening setting section for setting an opening of each of the flow controlling valves to a basic opening corresponding to a difference between a detected temperature of each of the temperature sensor and a set value of each of the operating unit;

determining section for determining a requested capacity of each of the indoor units in accordance with the difference between the detected temperature of each of the temperature sensor and the set value of each of the operating unit;

first detection section for detecting a saturate evaporation temperature or a saturate condensation temperature of the refrigerant in each of the indoor heat exchangers;

second detection section for detecting an actual capacity exhibited in each of the indoor units in accordance with the detected temperature of the first detection section and the detected temperature of each of the temperature sensor;

target value setting section for setting a target value for a superheat degree or a supercool degree of the refrigerant in each of the indoor heat exchangers on the basis of a ratio between the requested capacity of each indoor unit determined by the determining section and the actual capacity of each indoor unit detected by the second detection section;

third detection section for detecting an actual value of the superheat degree or the supercool degree of the refrigerant in each of the indoor heat exchanger;

correction section for correcting the opening of each of the flow controlling valves so that the actual value detected by the third detection section coincides with the target value set by the target value setting section; and suppressing section for suppressing a value of the requested capacity of each indoor unit determined by the determining means by an amount corresponding to a difference between the actual value detected by the third detection section and the target value set by the target value setting section.

This invention can be more fully understood from the following detailed description when taken in conjunction with the accompanying drawings, in which:

FIG. 1 is a diagram illustrating the structure of a refrigeration cycle according to an embodiment of the present invention;
FIG. 2 is a block diagram of a control circuit of the embodiment;
FIG. 3 is a flowchart illustrating the effect of an outdoor unit of the embodiment;
FIG. 4 is a flowchart illustrating the effect of each indoor unit of the embodiment; and

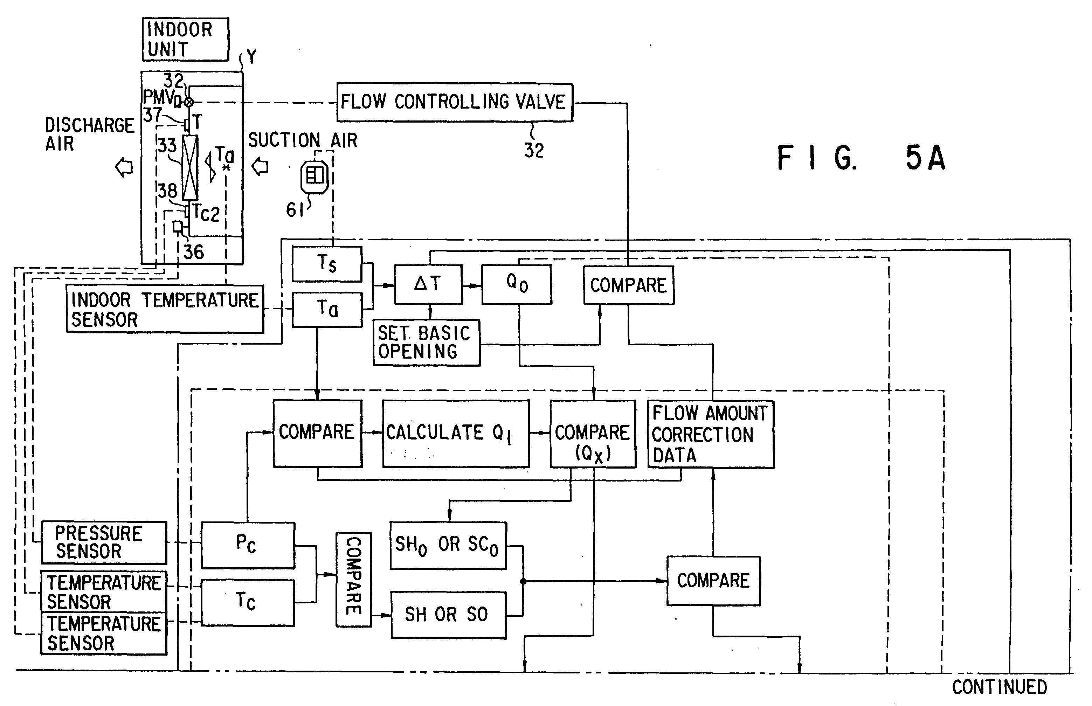

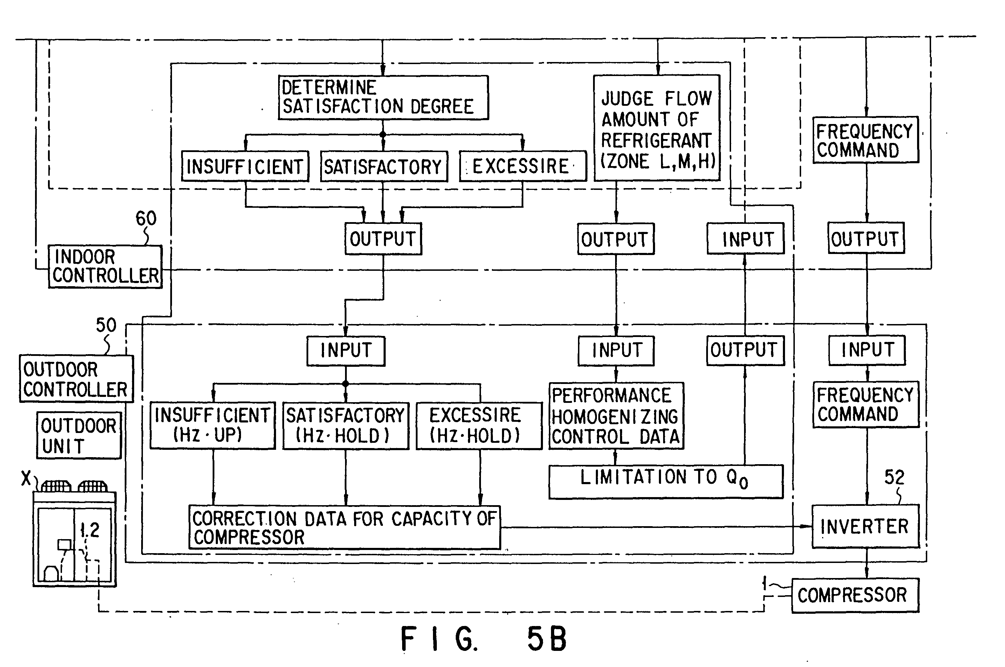

FIGS. 5A and 5B are block diagrams easily summarizing an overall control of the embodiment, FIG. 5A being the upper half and FIG. 5B the bottom half, of a single figure.

An embodiment of the present invention will now be described with reference to drawings.

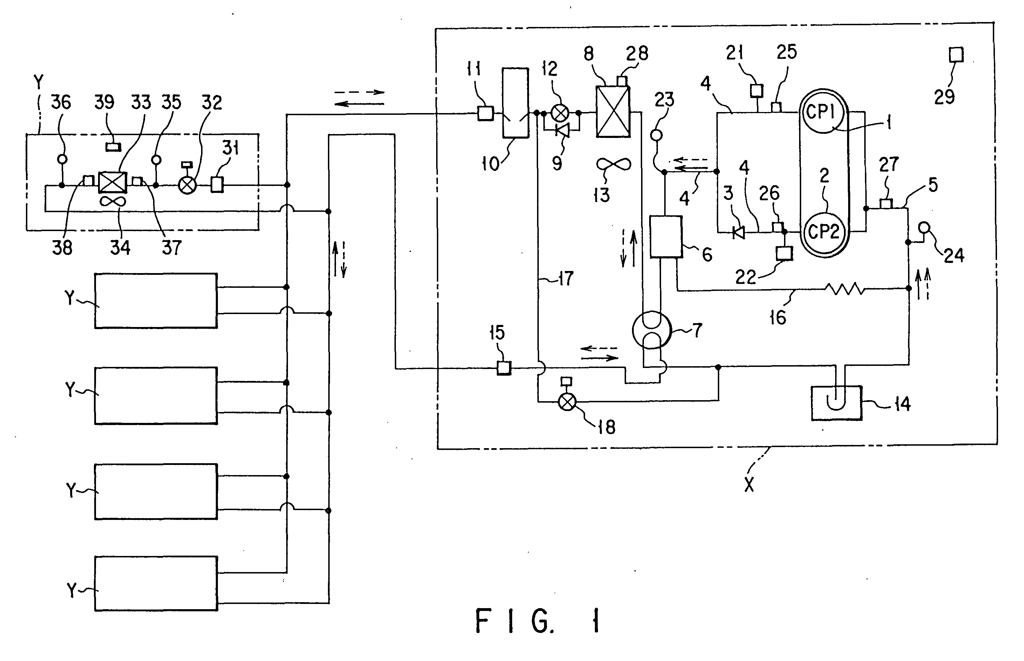

As shown in FIG. 1, a plurality of indoor units Y are connected via pipes to an outdoor unit X.

The outdoor unit X has compressors 1 and 2. The compressors 1 and 2 are housed in a common air-tight case, and each of them serves to inhale refrigerant, compress it within and discharge it therefrom. The compressor 1 is a capacity-variable compressor driven by an inverter, and the compressor 2 is a capacity-fixed compressor driven by a commercial power source.

A high-pressure tube 4 is connected to discharge ports of the compressors 1 and 2. A check valve 3 is provided for the high-pressure pipe 4 connected to the discharge port of the compressor 2. A low-pressure tube 5 is connected to an inlet port of each of the compressors 1 and 2.

An outdoor heat exchanger 8 is connected to the high-pressure tube 4 via an oil separator 6 and a four-way valve 7. A drier 11 is connected to the outdoor heat exchanger 8 via a check valve 9 and a liquid tank 10. An expansion valve 12 used for heating is connected in parallel with the check valve 9 to the drier 11. An outdoor fan 13 is provided near the outdoor heat exchanger 8. The outdoor fan 13 allows to outdoor air flow into the outside heat exchanger 8 for circulation.

A strainer 15 is connected to the low pressure tube 5 via an accumulator 14 and the four-way valve 7.

The oil separator 6 extracts lubricant contained in the refrigerant discharged from the compressors 1 and 2. An oil-returning tube 16 is connected between the oil separator 6 and the low-pressure pipe 5.

An end of a cooling bypass 17 is connected to the pipe connected between the check valve 9 and the liquid tank 10. The other end of the cooling bypass 17 is connected to the pipe of the low-pressure side, connected between the four-way valve 7 and the accumulator 14. An opening variable valve 18 is provided for the cooling bypass 17.

A high-pressure switch 21 and a refrigerant temperature sensor 25 are provided in the pipe connected between the discharge port of the compressor 1 and the high-pressure tube 4. A high-pressure switch 22 and a refrigerant temperature sensor 26 are provided in the high-pressure pipe connected between the discharge port of the compressor 2 and the check valve 3. The high-pressure switches 21 and 22 are turned on when the pressure of the refrigerant increases abnormally to reach a predetermined value.

A refrigerant pressure sensor 23 is provided for the high-pressure tube 4. The refrigerant pressure sensor 24 and the refrigerant temperature sensor 27 are provided for the low-pressure tube 5. A heat exchanger temperature sensor 28 is provided for the outdoor heat exchanger 8. An outdoor temperature sensor 29 is mounted at a predetermined portion of the outdoor unit X.

An indoor heat exchanger 33 is connected between the drier 11 and the strainer 15 via a strainer 31 and a flow controlling valve 32. An indoor fan 34 is provided near the indoor heat exchanger 33. The indoor fan 34 allows indoor air to flow into the indoor heat exchanger 33 for circulation.

The flow controlling valve 32 is a so-called pulse motor valve which changes its opening continuously in accordance with the number of input driving pulses, and is capable of controlling the flow of the refrigerant by changing its opening. The opening variable valve 18 is a pulse motor valve similar to the valve 32. A flow controlling valve or an opening variable valve will be abbreviated as PMV hereinafter.

A refrigerant pressure sensor 35 and a refrigerant temperature sensor 37 are mounted on the pipe connected between the PMV 32 and the indoor heat exchanger 33. A refrigerant pressure sensor 36 and a refrigerant temperature sensor 38 are mounted on the pipe connected between the indoor heat exchanger 33 and the strainer 15, at a position close to the indoor heat exchanger 33. An indoor temperature sensor 39 is provided on the flow path for indoor air take in as the indoor fan 34 is driven.

The structure from the strainer 31 to the indoor temperature sensor 39 is common to all the indoor units Y.

With the connection of the outdoor unit X to each of the indoor units Y via piping, a heat-pump type refrigeration cycle is constituted.

For a cooling operation, a cooling cycle in which refrigerant discharged from the compressors 1 and 2 flows in the direction indicated by a solid line arrow in the figure, is constituted. The outdoor heat exchanger 8 serves as a condenser and each of the indoor heat exchangers 33 serves as an evaporator.

For a heating operation, the flow path is switched by the four-way valve 7, and a heating cycle in which refrigerant discharged from the compressors 1 and 2 flows in the direction indicated by the broken line arrow, is constituted. Each of the indoor heat exchanger 33 serves as a condenser and the outdoor heat exchanger 8 serves as an evaporator.

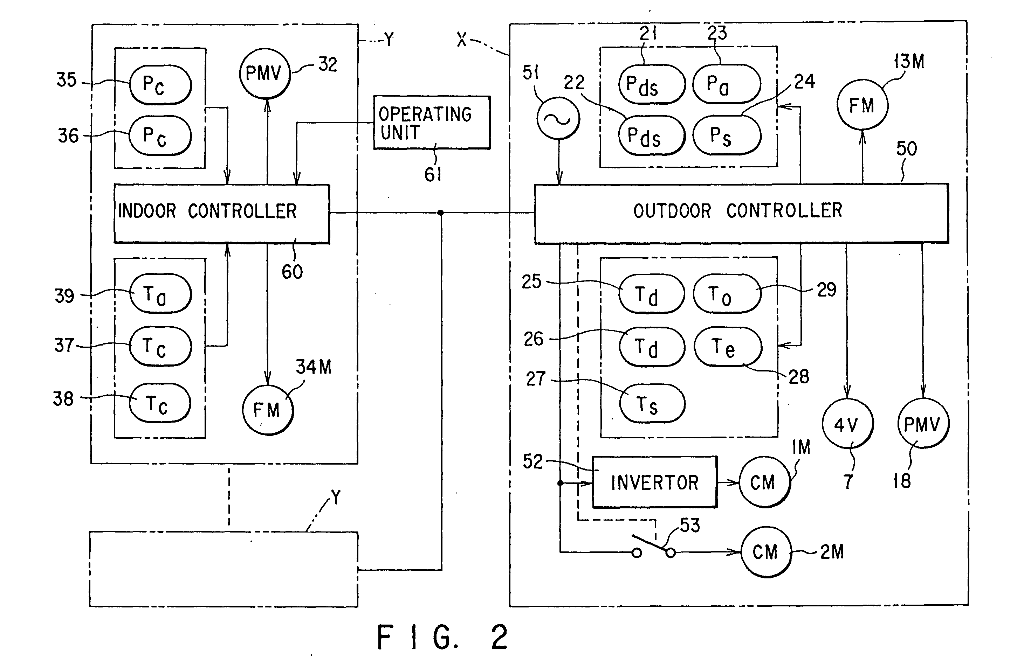

FIG. 2 shows a control circuit.

As shown in the figure, an outdoor controller 50 is provided in the outdoor unit X, and an indoor controller 60 is provided in each of the indoor units Y. The outdoor controller 50 and each of the indoor controllers 60 are connected to each other via wiring.

The outdoor controller 50 consists of a microcomputer and its periphery circuits. To the outdoor controller 50, the four-way valve 7, an outdoor fan motor 13M, the PMV 18, the high-pressure switches 21 and 22, the refrigerant pressure sensors 23 and 24, the refrigerant temperature sensors 25, 26 and 27, the heat exchanger temperature sensor 28, the outdoor temperature sensor 29, a commercial AC power source 51, an inverter 52 and a switch 53 are connected.

The inverter 52 serves to rectify a voltage from the commercial AC power source 51 and convert the rectified voltage into a voltage having a frequency corresponding to a command from the outdoor controller 50 by switching, which is output. This output is supplied to a compressor motor 1M as a driving power.

The switch 53 is, for example, a contact point of an electromagnetic contractor. A compressor motor 2M is connected to the AC power line in the outdoor controller 50 via the switch 53.

The outdoor controller 60 consists of a microcomputer and its periphery circuits. To the outdoor controller 60, the PMV 32, an indoor fan motor 34M, the refrigerant pressure sensors 35 and 36, the refrigerant temperature sensors 37 and 38, the indoor temperature sensor 39, and a remote-control type operating unit 61 are connected.

Each of the indoor controller 60 includes the following functional means.

[1] Means for sending a drive mode command based on the operation of the operating unit 61, a drive start command, a drive stop or the like to the outdoor unit X.

[2] Means for obtaining a difference $\Delta T$ between a detected temperature (temperature of air taken in) Ta by the indoor temperature sensor 39 and a set value Ts set by operating the operating unit 61, determining a frequency command corresponding to the temperature difference $\Delta T$, and outputting it to the outdoor unit X. The frequency command is a command used for setting the number of those driven of the compressors 1 and 2 and the capacity of the compressor 1.

There are two types of frequency commands, one for cooling and the other for heating. For cooling, 11 stepwise codes from S3 to SD as shown in TABLE 1 are prepared, and for heating, 13 stepwise codes from S3 to SF as shown in TABLE 2 are prepared.

TABLE 1

| Frequency command | S3 | S4 | S5 | S6 | S7 | S8 | S9 |
|---|---|---|---|---|---|---|---|
| Coeffi-cient A | 0.50 | 0.55 | 0.60 | 0.65 | 0.70 | 0.75 | 0.80 |

(continued)

TABLE 1

| Frequency command | SA | SB | SC | SD |
|---|---|---|---|---|
| Coeffi-cient A | 0.85 | 0.90 | 0.95 | 1.00 |

TABLE 2

| Frequency command | S3 | S4 | S5 | S6 | S7 | S8 | S9 |
|---|---|---|---|---|---|---|---|
| Coeffi-cient A | 0.50 | 0.54 | 0.58 | 0.63 | 0.67 | 0.71 | 0.75 |

(continued)

TABLE 2

| Frequency command | SA | SB | SC | SD | SE | SF |
|---|---|---|---|---|---|---|
| Coeffi-cient A | 0.79 | 0.83 | 0.88 | 0.92 | 0.96 | 1.00 |

[3] Means for setting the opening of the PMV 32 to a basic opening in accordance with the frequency command (that is, the temperature difference $\Delta T$).

[4] Means for determining a requested capacity $Q_0$ of the indoor unit in accordance with the temperature difference $\Delta T$.

More specifically, the requested capacity $Q_0$ is determined from the following equation using the capacity (horse power) set for the indoor unit, a coefficient A in accordance with the frequency command (that is, the temperature difference $\Delta T$), and a capacity correction coefficient B based on the average value of temperatures Ta detected by the indoor temperature sensor 39. Note that there are two types of coefficient A, one for cooling shown in TABLE 1 and the other for heating shown in TABLE 2, and one type is selected in accordance with the frequency

command.

$$Q_0 = 2500 \times \text{horse power} \times A \times B$$

$$B = (\text{average value of Ta}) \times 0.03 + 0.2$$

[5] Means for detecting a saturated evaporation temperature Teo or a saturated condensation temperature Tco of the refrigerant in the indoor heat exchanger 33. The saturated evaporation temperature Teo is detected in a cooling operation, and the saturated condensation temperature Tco in a heating operation.

[6] Means for detecting an actual capacity $Q_1$ (approximating capability at driving) exhibited in the indoor unit on the basis of the detected saturated evaporation temperature Teo or saturated condensation temperature Tco and the detected temperature Ta of the indoor temperature sensor 39.

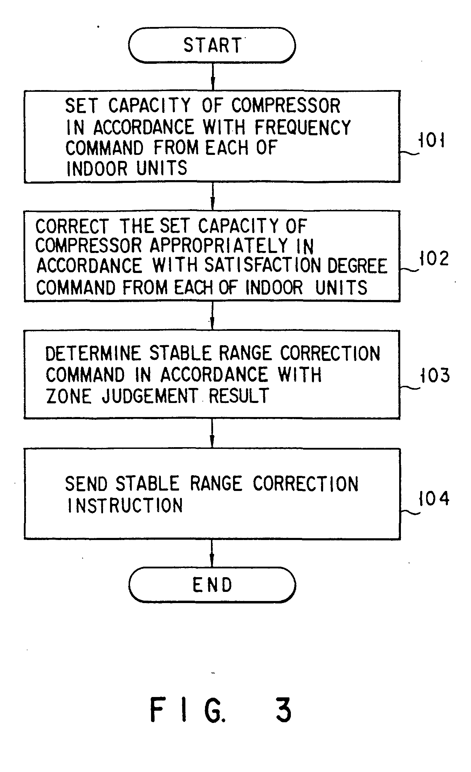

More specifically, the actual capacity $Q_1$ is determined from the following equation using the capacity (horse power) set for the indoor unit, a difference between the average value of temperatures Ta detected by the indoor temperature sensor 39 and the detected saturated evaporation temperature Teo or saturated condensation temperature Tco, and a heat exchange correction coefficient C. Note that the heat exchange correction coefficient C is selected by setting a jumper based on a manual manipulation. FIG. 3 shows the correspondence between the setting of jumper and the heat exchange correction coefficient C.

$$Q_1 = 118 \times \text{horse power} \times [(\text{average of Ta}) - Teo] \times C$$

... for cooling operation

$$Q_1 = 96 \times \text{horse power} \times [Tco - (\text{average of Ta})] \times C$$

... for heating operation

TABLE 3

| Setting of jumper | 0 | 1 | 2 | 3 | 4 | 5 | 6 | 7 |
|---|---|---|---|---|---|---|---|---|
| Heat exchange correction coefficient C | 1.5 | 1.3 | 1.2 | 1.1 | 0.8 | 0.7 | 0.6 | 1.0 |

[7] Means for setting a target value SHo of the superheat degree of the refrigerant in the indoor heat exchanger 33 or a target value of UCo of the supercooling degree, on the basis of a ratio Qx between the requested capacity $Q_0$ and the actual capacity $Q_1$ (= $Q_0/Q_1$). The target value SHo is set in a cooling operation, and the target value UCo is set in a heating operation.

For example, for the cooling operation, the conditions shown in TABLE 4 are stored, and the target value SHo of the superheating degree is set from the condition. If Qx is 100%, SHo = Odeg, and if Qx is 90%, SHo = 8 deg.

TABLE 4

| Ratio (%) | 100 | 95 | 90 | 85 | 75 | 65 | 50 | 30 |
|---|---|---|---|---|---|---|---|---|
| Superheat degree | 0 | 1 | 8 | 10 | 14 | 16 | 18 | 20 |

[8] Means for detecting an actual value SH of the superheat degree of the refrigerant of the indoor heat exchanger 33 or an actual value UC of the supercool degree of the refrigerant of the indoor heat exchanger 33. The actual value SH of the superheat degree is detected in a cooling operation, and the actual value UC of the supercool degree in a heating operation.

[9] Means for judging to which one of zones, low "L", middle "M" and high "H", the difference between the actual value SH or UC and the target value SHo or UCo, corresponds to, on the basis of TABLE 5 or TABLE 6.

TABLE 5

| Condition | Zone |
|---|---|
| $(SH-SH_0) \leqq 3$ | L |
| $3 < (SH-SH_0) \leqq 8$ | M |
| $8 < (SH-SH_0)$ | H |

TABLE 6

| Condition | Zone |
|---|---|
| $(UC-UC_0) \leqq 3$ | L |
| $3 < (UC-UC_0) \leqq 8$ | M |
| $8 < (UC-UC_0)$ | H |

[10] Means for controlling the value of the requested capacity $Q_0$ by an amount corresponding to the judgment result of the zone.

More specifically, the judgment result of the zone is sent to the outdoor unit X, and after that, the content of the stable range correction command returned from the outdoor unit X is collated with that in TABLE 7, thus correcting the coefficient A. The corrected coefficient A is applied in the above equation for obtaining the requested capacity $Q_0$, thus suppressing the value of the requested capacity $Q_0$.

TABLE 7

| Stable range correction command | Coefficient A |
|---|---|
| 100% | No suppress |
| 90% | 0.9 or more $\rightarrow$ 0.9 |
| 85% | 0.85 or more $\rightarrow$ 0.85 |
| 80% | 0.8 or more $\rightarrow$ 0.8 |
| 70% | 0.7 or more $\rightarrow$ 0.7 |
| 60% | 0.6 or more $\rightarrow$ 0.6 |
| 50% | 0.5 or more $\rightarrow$ 0.5 |
| 40% | 0.4 or more $\rightarrow$ 0.4 |

[11] Means for correcting the opening the PMV 32 so that the actual value SH or UC coincides with the target value SHo or UCo.

[12] Means for judging whether or not the amount of the refrigerant flowing to the indoor unit is satisfactory, from the suppression to the values of the requested capacity $Q_0$ and the ratio Qx (= $Q_0/Q_1$) between the requested capacity $Q_0$ and the actual capacity $Q_1$.

More specifically, the ratio Qx and the content of the stable range correction command returned from the indoor unit X are collated with the contents of TABLE 8, thus determining the satisfaction degree (insufficient/satisfactory/excessive) of the refrigerant flow amount.

Table 8

| Contents of stable range correction command | | | Satisfaction degree of refrigerant flow |
|---|---|---|---|
| 100% | 90%, 85%, 80%, 70% | 60%, 50%, 40% | |
| $Q_x > 105$ / $Q_x < 0$ | $Q_x > 100$ / $Q_x < 0$ | $Q_x > 95$ / $Q_x < 0$ | Insufficient |
| $90 \leqq Q_x \leqq 105$ | $80 \leqq Q_x \leqq 100$ | $70 \leqq Q_x \leqq 95$ | Satisfactory |
| $0 \leqq Q_x < 90$ | $0 \leqq Q_x < 80$ | $0 \leqq Q_x < 70$ | Excessive |

[13] Means for sending a satisfaction degree command indicating the determined satisfaction degree to the outdoor unit X.

The outdoor controller 50 of the outdoor unit X includes the following functional means.

[1] Means for setting the capacity of each of the compressors 1 and 2, that is, the number of those driven of the compressors 1 and 2, and the capacity of the compressor 1 (the output frequency F of the inverter 52), in accordance with the frequency command sent from each of the indoor units Y.

[2] Means for appropriately correcting the set capacity in accordance with the content of the satisfaction degree command sent from each of the indoor units Y.

[3] Means for determining a stable range correction instruction with regard to each of the indoor unit Y on the basis of the data of the zone judgment result sent from the corresponding one of the indoor units Y.

There are 8 ranks of the stable range correction command, shown in TABLE 9, and a 3-digit transmission bit is assigned to each rank.

Table 9

| Rank | Transmit bit | Content | Rank | Transmit bit | Content |
|------|--------------|---------|------|--------------|---------|
| 8 | 000 | 100% | 4 | 100 | 70% |
| 7 | 001 | 90% | 3 | 101 | 60% |
| 6 | 010 | 85% | 2 | 110 | 50% |
| 5 | 011 | 80% | 1 | 111 | 40% |

[4] Means for sending each of the determined stable range correction instruction commands to the corresponding one of the indoor units Y.

[5] First protection means for decreasing the capacity (the output frequency F of the inverter 52) of the compressor 1 by a predetermined value, when the pressure Pd detected by the refrigerant pressure sensor 23 abnormally increases to reach the set value Pdx (which is lower than the operation points of the high-pressure switches 21 and 22).

[6] Second protection means for stopping the driving of the compressor 1 when the high-pressure switch 21 operates and stopping the driving of the compressor 2 when the high-pressure switch 22 operates.

[7] Means for opening the PMV 18 of the cooling bypass 17 and controlling its opening in accordance with a higher one of $T_{d1}$ and $T_{d2}$ when one of the temperature (discharged refrigerant temperature) $T_{d1}$ detected by the refrigerant temperature sensor 25 and the temperature $T_{d2}$ (discharged refrigerant temperature) detected by the refrigerant temperature sensor 26, increases to a set value Tdx.

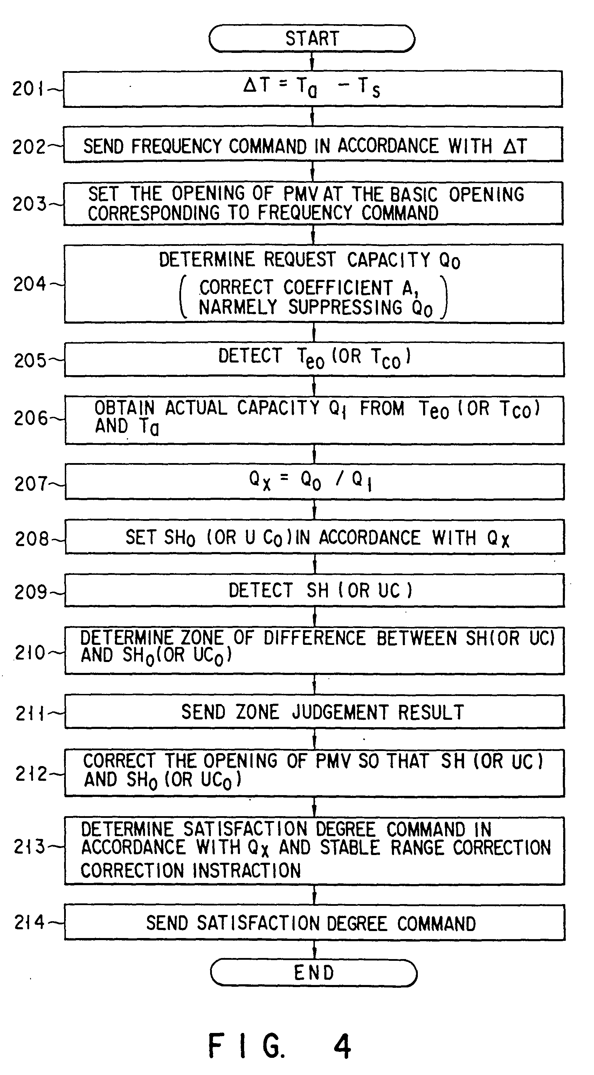

Next, the operation of the present invention have the above-described structure will now be described with reference to flowcharts shown in FIGS. 3 and 4.

A user sets a predetermined driving mode and a set value Ts for an arbitrary indoor unit Y, using a operation unit 61, and when a drive start operation is carried out, at least the compressor 1 of the compressors 1 and 2 is driven for start of driving.

In the case of a cooling operation mode, the refrigerant flows in the direction indicated by the solid-line arrow in FIG. 1, thus a cooling cycle is formed. With this cooling cycle, the outdoor heat exchanger 8 functions as a condenser, and the indoor heat exchanger 33 as an evaporator. In the case of a heating operation mode, the flow path is switched by the four-way valve 7, and the refrigerant flows in the direction indicated by the broken-like arrow shown in FIG. 1, thus a heating cycle is formed. With this heating cycle, the indoor heat exchanger 33 functions as a condenser, and the indoor heat exchanger 8 as an evaporator.

In the indoor unit Y, the difference between $\Delta T$ between the temperature Ta (suction air temperature) detected by the indoor temperature sensor 39 and the set temperature value Ts set by the operating unit 61 (Step 201), and a frequency command corresponding to the temperature difference $\Delta T$ is sent to the outdoor unit X (step 202). Further, the opening of the PMV 32 is set at the basic opening corresponding to the frequency command (step 203).

In the outdoor unit X, the capacities of the compressors 1 and 2 (the number of those driven of the compressors 1 and 2 and the capacity of the compressor 1) are set for every predetermined time, for example, every two minutes, in accordance with a frequency command sent from each of the indoor units Y (step 101).

For example, the content of the frequency command, that is, the requested capacity, is small, the output frequency F of the inverter 52 is controlled, and the capacity variable driving is carried out by solely the compressor 1. When the requested capacity is increased, the output frequency F of the inverter 52 is controlled and the switch 52 is turned on, thus the capacity variable driving of the compressor 1 and the capacity fixed driving of the compressor 2 are carried out.

In an indoor unit Y, the requested capacity $Q_0$ of the indoor unit is determined in accordance with the frequency command of itself as follows (step 204).

First, a coefficient A corresponding to the frequency command is selected from the conditions specified in the before-described TABLE 1 in the case of the cooling operation, or from those of the above-described TABLE 2 in the case of the heating operation. For example, in the cooling operation, when the frequency command is S3, a coefficient A = 0.50 is selected. When the frequency command is S4, a coefficient A = 0.55 is selected.

A capacity correction coefficient B is obtained from the following equation using the average of suction air temperatures Ta.

$$B = (\text{average of Ta}) \times 0.03 + 0.2$$

A requested capacity $Q_0$ is determined from the following equation, using a coefficient A and a capacity correction coefficient B.

$$Q_0 = 2500 \times \text{horse power} \times A \times B$$

The requested capacity $Q_0$ is determined on the basis of not only the temperature difference $\Delta T$ indicating how high or low the suction air temperature Ta is with respect to the set value Ts, but also the absolute value itself of the suction air temperature Ta, and therefore the $Q_0$ value can be obtained in full consideration of the amenity sensed by human body.

In the cooling operation, the saturated evaporation temperature Teo of the refrigerant in the indoor heat exchanger 33 is detected from the pressure $P_{c2}$ (vapor pressure) detected by the refrigerant pressure sensor 36 (step 205). The actual capacity $Q_1$ (the approximating capability at the time of driving) exhibited by the indoor unit is obtained from the following equation on the basis of the detected saturated evaporation temperature Teo and the average value of the suction air temperatures Ta (step 206).

$$Q_1 = 118 \times \text{horse power} \times [(\text{average of Ta}) - \text{Teo}] \times C$$

In the heating operation, the saturated condensation temperature Tco of the refrigerant in the indoor heat exchanger 33 is detected from the pressure $P_{c2}$ (condensation pressure) detected by the refrigerant pressure sensor 35 (step 205). The actual capacity $Q_1$ (the approximating capability at the time of actual driving) exhibited by the indoor unit is obtained from the following equation on the basis of the detected saturated condensation temperature Tco and the average value of the suction air temperatures Ta (step 206).

$$Q_1 = 96 \times \text{horse power} \times [\text{Tco} - (\text{average of Ta})] \times C$$

It should be noted that the heat exchange correction coefficient C is selected by setting a jumper, which is carried out through a manual operation (TABLE 3).

The ratio Qx between the requested capacity $Q_0$ and the actual capacity $Q_1$ (= $Q_0/Q_1$) is obtained (step 207). The target value SHo of the superheat degree (in cooling operation) of the refrigerant in the indoor heat exchanger 33 or the target value UCo of the supercool degree (in heating operation) of the refrigerant in the indoor heat exchanger 33 is set on the basis of the ratio Qx (step 208).

For example, in the cooling operation, when Qx is 100%, SHo = 0 deg., and when Qx is 90%, SHo = 8 deg., on the basis of the conditions summarized in the above TABLE 4.

In the cooling operation, the actual value SH of the superheat degree of the refrigerant in the indoor heat exchanger 33 is detected on the basis of the temperature $T_{c2}$ (evaporator outlet temperature) detected by the refrigerant temperature sensor 38 and the pressure $P_{c2}$ (evaporation pressure) detected by the refrigerant pressure sensor 36 (step 209). In the heating operation, the actual value UC of the superheat degree of the refrigerant in the indoor heat exchanger 33 is detected on the basis of the temperature $T_{c1}$ (condenser outlet temperature) detected by the refrigerant temperature sensor 37 and the pressure $P_{c1}$ (condensation pressure) detected by the refrigerant pressure sensor 35 (step 209).

In the cooling operation, a zone is determined on the basis of the conditions specified in the above TABLE 5, in accordance with the difference between the actual value SH and the target value SHo (step 210). For example, when an actual value SH is larger than a target value SHo and the difference therebetween is within 3 degrees, the zone is judged to be "L". When the actual value SH is larger than the target value SHo and the difference therebetween is within a range of 4 to 8 degrees, the zone is judged to be "M". When the actual value SH is larger than the target value SHo, and the difference therebetween is 9 degree or more, the zone is judged to be "H".

In the heating operation, a zone is determined on the basis of the conditions specified in the above TABLE 6, in accordance with the difference between the actual value UC and the target value UCo (step 210). For example, when an actual value UC is larger than a target value UCo and the difference therebetween is within 3 degrees, the zone is judged to be "L". When the actual value UC is larger than the target value UCo and the difference therebetween is within a range of 4 to 8 degrees, the zone is judged to be "M". When the actual value UC is larger than the target value UCo, and the difference therebetween is 9 degree or more, the zone is judged to be "H".

The data of the zone judgment result thus obtained is sent to the outdoor unit X (step 211).

Further, the opening of the PMV 32 is corrected so that the actual value SH (or UC) coincides with the target value SHo (or UCo).

For example, when a requested capacity $Q_0$ and an actual capacity $Q_1$ are the same, namely the a ratio Qx is 100%, the target value SHo of the superheat degree is 0 degree. Therefore, the PMV 32 is fully opened so that the actual value SH of the superheat degree will become 0 degree.

When the requested capacity $Q_0$ is smaller than the actual capacity $Q_1$, and the ratio Qx is 90%, the target value SHo of the superheat degree is 8 degrees. Therefore, the opening of the PMV 32 is reduced so that the actual value SH of the superheat degree will become 8 degrees. That is, in this case, since the actual capacity $Q_1$ is larger than the requested capacity $Q_0$, the flow amount of the refrigerant to the indoor heat exchanger 33 is reduced by an excessive amount corresponding to the difference between the actual and requested capacities.

The ratio Qx and the content of the stable range correction command (used to determine the suppressing amount with respect to the request performance $Q_0$) sent back from the outdoor unit X are collated with the conditions shown in the above TABLE 8, and the satisfaction degree of the flow amount of the refrigerant (insufficient/satisfactory/excessive) in the indoor unit is determined (step 213). Then, the number of times a satisfaction degree is determined is counted for each of the contents (step 213). In accordance with the count value, a final satisfaction degree command is determined, and this command is sent to the outdoor unit X (step 214).

For example,

(1) a content of the satisfaction degree is "satisfactory", the satisfaction degree command indicating "satisfactory" is transmitted;

(2) a content of the satisfaction degree is "insufficient", the count value for insufficiency is rendered "1";

(3) the next content of the satisfaction degree is again "insufficient", the count value for insufficiency is increased by 1 to be "2".

(4) the next content of the satisfaction degree is again "insufficient", the count value for insufficiency is increased by 1 to be "3".

(5) when the count value for insufficiency is "1" or "2", the satisfaction degree command indicating "satisfactory" is transmitted.

(6) when the count value for insufficiency becomes "3", the satisfaction degree command indicating "insufficient" is transmitted for the first time.

(7) When the content of the satisfaction degree changes from "insufficient" to "satisfactory" or "excessive", the count value for insufficiency is cleared, and the satisfaction degree command indicating "satisfactory" is transmitted.

(8) When a content of the satisfaction degree is "excessive", the count value for excess is rendered "1";

(9) the next content of the satisfaction degree is again "excessive", the count value for excess is increased by 1 to be "2".

(10) the next content of the satisfaction degree is again "excessive", the count value for excess is increased by 1 to be "3".

(11) when the count value for excess is "1" or "2", the satisfaction degree command indicating "satisfactory" is transmitted.

(12) when the count value for insufficiency becomes "3", the satisfaction degree command indicating "excessive" is transmitted for the first time.

(13) When the content of the satisfaction degree changes from "excessive" to "satisfactory" or "insufficient", the count value for excess is cleared, and the satisfaction degree command indicating "satisfactory" is transmitted.

In the outdoor unit X, the contents of the satisfaction degree commands sent from the indoor units Y are averaged. In accordance with the average, the capacities (which are set in accordance with the frequency command) of the compressors 1 and 2 are corrected (step 102).

For example, when the average of the contents of the satisfaction degree commands is "excessive", the capacity of the compressor 1 is reduced by a predetermined value (the output frequency ΔF of the inverter 52). When the average of the contents of the satisfaction degree commands is "satisfactory", the capacities of the compressors 1 and 2 are maintained as they are. When the average of the contents of the satisfaction degree commands is "insufficient", the capacity of the compressor 1 is increased by a predetermined value (the output frequency ΔF of the inverter 52).

When the capacity of the compressor 1 is reduced in the case where the refrigerant flow to the indoor heat exchanger 33 is "excessive", the opening of the PMV 32 is changed for increment. When the opening of the PMV 32 is increased, the resistance to the refrigerant flow in the cooling cycle is reduced. Therefore, the loads applied on the compressors 1 and 2 are reduced, thus achieving an energy-saving effect.

In the outdoor unit X which has received the zone judgment result from each of the indoor units Y, a stable range correction command is determined for each of the indoor units Y, in accordance with the corresponding zone judgment result. The stable range correction command is common to all of the indoor units Y. As shown in the above TABLE 9, there are 8 ranks "1" to "8" are prepared, and a 3-digital transmission bit is assigned to each rank.

The rank of the stable range correction command is determined as follows.

(1) Rank "8" is set as an initial value.
(2) The rank is lowered by 1 when a zone judgment result of "H" is sent continuously for 5 minutes from at least one of the indoor units Y. After that, if a zone judgment result of "H" is being sent further continuously, the rank is lowered by 1 for every 5 minutes.
(3) When the zone judgment results of all the indoor units Y are either "H" or "L", the current rank is held.
(4) The rank is raised by 1 when a zone judgment result of "L" is sent continuously for 15 minutes from all of the indoor units Y. After that, if a zone judgment result of "L" is being sent further continuously, the rank is raised by 1 for every 5 minutes.
(5) When the zone judgment results of all the indoor units Y are "M", the current rank is raised by 1 in synchronous with the controlling operation for the capacity of a compressor, which is performed every two minutes.

In each of the indoor units Y, to which such a stable range correction command is transmitted, the coefficient A used for the calculation of the requested capacity $Q_0$ is corrected in accordance with the stable range correction command (step 204). The relationship between a stable range correction command and correction of the coefficient A is summarized in the above TABLE 7.

For example, when the stable range correction command is 90%, the value of the coefficient A is suppressed to "0.9". When the stable range correction command is 85%, the value of the coefficient A is suppressed to "0.85". When the stable range correction command is 80%, the value of the coefficient A is suppressed to "0.8".

When the value of the coefficient A is suppressed, the suppression directly reflects the suppression to the value of the requested capacity $Q_0$ (step 204).

When the value of the requested capacity $Q_0$ is suppressed, the ratio Qx is limited to a predetermined value or lower, and the target value SHo of the superheat degree (or the target value UCo of the supercool degree) is limited to a small value.

In other words, the opening of the PMV 32 is not only set on the basis of the difference $\Delta T$ between the suction air temperature Ta and the set value Ts, but also corrected in accordance with the ratio Qx between the actual performance $Q_1$ and the requested capacity $Q_0$. Further, this correction includes a feedback control which is performed in accordance with the difference between the actual value SH of the superheat degree (or the actual value UC of the supercool degree) and the target value SHo of the superheat degree (or the actual value UCo of the supercool degree).

Therefore, even if the pipes connected between the outdoor unit X and the indoor units Y are different from each other in length, or if the positions of the outdoor unit X and the indoor units Y are different from each other in height, an appropriate amount of refrigerant can be distributed to each of the indoor units Y.

In the outdoor unit X, the pressure Pd of the high-pressure side is being detected by the refrigerant pressure sensor 23, and when the pressure Pd of the high-pressure side is abnormally raised to reach the set value Pdx (lower than the operating points of the high-pressure switches 21 and 22), the capacity of the compressor 1 is reduced by a predetermined value. Due to the reduction of the capacity, an abnormal rise in the pressure Pd of the high-pressure side is prevented, thus protecting the cooling cycle devices such as the compressors 1 and 2.

If the abnormal rise in the pressure of the high-pressure side is continued in spite of the reduction of the capacity, the high-pressure switch 21 is operated to stop the drive of the compressor 1. When the high-pressure switch 22 is operated, the drive of the compressor 2 is stopped. As the drive is stopped, the cooling cycle devices are surely protected.

In the outdoor unit X, the discharge refrigerant temperature $T_{d1}$ of the compressor 1 is detected by the refrigerant temperature sensor 25 and the discharge refrigerant temperature $T_{d2}$ of the compressor 2 is detected by the refrigerant temperature sensor 26, and when either one of the detected temperatures is raised to be the set value Tdx, the PMV 18 of the cooling bypass is opened. Thus, the opening of the PMV 18 is controlled in proportional to the higher one of the detected temperatures $T_{d1}$ and $T_{d2}$.

As the PMV 18 is opened, a portion of the refrigerant flowing through the liquid-side line of the refrigeration cycle, is allowed to pass the cooling bypass 17 and flow into the suction side of the compressors 1 and 2. The temperature of the liquid refrigerant flowing thereinto is sufficiently low, so as to achieve the cooling effect with respect to the compressors 1 and 2. Therefore, an abnormal rise in discharge refrigerant temperature or suction refrigerant temperature is suppressed. Thus, due to the control of the cooling bypass, the refrigeration cycle devices are protected.

**Claims**

1. An air conditioning apparatus in which a plurality of indoor units (Y) are connected to an outdoor unit (X), said apparatus **characterized by** comprising:

   a compressor (1), provided in said outdoor unit (X), for discharging a refrigerant;
   an outdoor heat exchanger (8) provided in said outdoor unit (X);
   a plurality of flow controlling valves (32), provided in each of said plurality of indoor units (Y), for controlling a flow of the refrigerant by changing an opening of each valve;
   a plurality of indoor heat exchangers (33) each provided in each of said plurality of indoor units (Y);
   a refrigeration cycle for connecting said compressor (1), said outdoor heat exchanger (8), each of said plurality of flow controlling valves (32), and each of said plurality of indoor heat exchangers (33) through each other, for circulation of the refrigerant; and
   temperature detection means (39), provided in each of said plurality of indoor units (Y), for detecting a temperature (Ta) of indoor air;

   **characterized by**

   operating means (61), provided in each of said indoor units (Y), for setting a set value (Ts) for the temperature (Ta) of the indoor air;
   opening setting means for setting an opening of each of said flow controlling valves (32) to a basic opening corresponding to a difference between a detected temperature (Ta) of each of said temperature detection means (39) and a set value (Ts) of each of said operating means (61) ;
   determining means for determining a requested capacity ($Q_0$) of each of said indoor units (Y) in accordance with the difference between the detected temperature (Ta) of each of said temperature detection means (39) and the set value (Ts) of each of said operating means (61);
   first detection means for detecting a saturate evaporation temperature (Teo) or a saturate condensation temperature (Tco) of the refrigerant in each of said indoor heat exchangers (33);
   second detection means for detecting an actual capacity ($Q_1$) exhibited in each of said indoor units (Y) in accordance with the detected temperature (Teo or Tco) of the first detection means and the detected temperature (Ta) of each of said temperature detection means (39);
   target value setting means for setting a target value (SHo or UCo) for a superheat degree or a supercool degree of the refrigerant in each of said indoor heat exchangers (33) on the basis of a ratio (Qx) between the requested capacity ($Q_0$) of each indoor unit (Y) determined by said determining means and the actual capacity ($Q_1$) of each indoor unit (Y) detected by said second detection means;
   third detection means for detecting an actual value (SH or UC) of the superheat degree or the supercool degree of the refrigerant in each of said indoor heat exchanger (33);
   correction means for correcting the opening of each of said flow controlling valves (32) so that the actual value (SH or UC) detected by said third detection means coincides with the target value (SHo or UCo) set by said target value setting means; and
   suppressing means for suppressing a value of the requested capacity ($Q_0$) of each indoor unit (Y) determined by said determining means by an amount corresponding to a difference between the actual value (SH or UC) detected by said third detection means and the target value (SHo or UCo) set by said target value setting means.

2. An apparatus according to claim 1,
   **characterized in that** said determining means determining the requested capacity ($Q_0$) of each of said indoor units (Y) through a calculation of the capacity set for each of said indoor units (Y), a coefficient (A) corresponding to the difference between the detected temperature (Ta) of each of said temperature detection means and the set value (Ts) of each of the operating means (61), and a capacity correction coefficient (B) on the basis of an average value of detected temperatures (Ta) of said temperature detection means (39).

3. An apparatus according to claim 1,
   **characterized in that** said second detection means detects an actual capacity ($Q_1$) exhibited in each of said indoor units (Y) by calculating the capacity set for each of said indoor units (Y), and a difference between the detected temperature (Teo or Tco) of the first detection means and an average value of the detected temperatures (Ta) of said temperature detection means (39).

4. An apparatus according to claim 1,
   **characterized in that** said compressor (1) is of a capacity variable type.

5. An apparatus according to claim 4,
   **characterized by** further comprising:

   control means for controlling the capacity of said compressor (1) in accordance with a difference between the detected temperature (Ta) of each of said temperature detection means (39) and the set value (Ts) of each of the operating means (61).

6. An apparatus according to claim 4,
   **characterized by** further comprising:

   judging means for judging whether or not an amount of refrigerant flowing into each of said indoor units (Y) is satisfactory, on the basis of a ratio (Qx) between the requested capacity ($Q_0$) of each of said indoor units (Y), determined by said determining means and the actual capacity ($Q_1$) of each of said indoor units (Y) detected by said second detection means, and a suppressed amount by said suppression means; and
   control means for correcting the capacity of said compressor (1) in accordance with a judgment result of said judging means.

7. An apparatus according to claim 6,
   **characterized in that** said determining means determines the requested capacity ($Q_0$) of each of said indoor units (Y) through a calculation of the capacity set for each of said indoor units (Y), a coefficient (A) corresponding to the difference between the detected temperature (Ta) of each of said temperature detection means (39) and the set value (Ts) of each of the operating means (61), and a capacity correction coefficient (B) on the basis of an average value of detected temperatures (Ta) of said temperature detection means (39).

8. An apparatus according to claim 6,
   **characterized in that** said second detection means detects an actual capacity ($Q_1$) exhibited in each of said indoor units (Y) by calculating the capacity set for each of said indoor units (Y), and a difference between the detected temperature (Teo or Tco) of the first detection means and an average value of the detected temperatures ($T_2$) of said temperature detection means (39).

**Patentansprüche**

1. Klimaanlage, bei der eine Mehrzahl von Innenraumeinheiten (Y) mit einer Außenraumeinheit (X) verbunden ist, wobei die Anlage aufweist:

   einen Kompressor (1), der in der Außenraumeinheit (X) zum Entladen eines Kühlmittels vorgesehen ist;
   einen Außenraum-Wärmetauscher (8), der in der Außenraumeinheit (X) vorgesehen ist;
   eine Mehrzahl von Strömungssteuerventilen (32), die in jeder der Mehrzahl von Innenraumeinheiten (Y) zum Steuern eines Flusses des Kühlmittels durch Ändern einer Öffnung jedes Ventils vorgesehen sind;
   eine Mehrzahl von Innenraum-Wärmetauschern (33), die jeweils in jeder der Mehrzahl der Innenraumeinheiten (Y) vorgesehen sind;
   einen Kältekreislauf zum Verbinden des Kompressors (1), des Außenraum-Wärmetauschers (8), jedes der Mehrzahl von Strömungssteuerventilen (32) und jedes der Mehrzahl von Innenraum-Wärmetauschern (33) aneinander für die Zirkulation des Kühlmittels; und
   Temperaturerfassungsmittel (39), das in jeder der Mehrzahl von Innenraumeinheiten (Y) zum Erfassen einer Temperatur (Ta) der Innenraumluft vorgesehen ist;

   **gekennzeichnet durch**

   Betriebsmittel (61), das in jeder der Innenraumeinheiten (Y) zum Einstellen eines Sollwerts (Ts) für die Temperatur (Ta) der Innenraumluft vorgesehen ist;

Öffnungseinstellmittel zum Einstellen einer Öffnung von jedem der Strömungssteuerventile (32) auf eine Grundöffnung, die einer Differenz zwischen einer erfaßten Temperatur (Ta) von jedem der Temperaturerfassungsmittel (39) und einem Sollwert (Ts) von jedem der Betriebsmittel (61) entspricht;

Bestimmungsmittel zum Bestimmen einer geforderten Kapazität ($Q_0$) von jeder der Innenraumeinheiten (Y) gemäß der Differenz zwischen der erfaßten Temperatur (Ta) von jedem der Temperaturerfassungsmittel (39) und des Sollwerts (Ts) von jedem der Betriebsmittel (61);

erstes Erfassungsmittel zum Erfassen einer Sättigungs-Verdampfungstemperatur (Teo) oder einer Sättigungs-Kondensationstemperatur (Tco) des Kühlmittels in jedem der Innenraum-Wärmetauscher (33);

zweites Erfassungsmittel zum Erfassen einer tatsächlichen Kapazität ($Q_1$), die in jeder der Innenraumeinheiten (Y) gemäß der erfaßten Temperatur (Teo oder Tco) des ersten Erfassungsmittel und der erfaßten Temperatur (Ta) von jedem der Temperaturerfassungsmittel (39) aufgewiesen wird;

Zielwerteinstellmittel zum Einstellen eines Zielwerts (SHo oder UCo) für einen Überhitzungsgrad oder einen Unterkühlungsgrad des Kühlmittels in jedem der Innenraum-Wärmetauscher (33) auf der Grundlage eines Verhältnisses (Qx) zwischen der geforderten Kapazität ($Q_0$) jeder Innenraumeinheit (Y), die **durch** das Bestimmungsmittel bestimmt wird, und der tatsächlichen Kapazität ($Q_1$) jeder Innenraumeinheit (Y), die **durch** das zweite Erfassungsmittel erfaßt wird;

drittes Erfassungsmittel zum Erfassen eines Ist-Werts (SH oder UC) des Überhitzungsgrads oder des Unterkühlungsgrads des Kühlmittels in jedem der Innenraum-Wärmetauscher (33),

Korrekturmittel zum Korrigieren der Öffnung von jedem der Strömungssteuerventile (32), so daß der **durch** das dritte Erfassungsmittel erfaßte Ist-Wert (SH oder UC) mit dem **durch** das Zielwerteinstellmittel eingestellten Zielwert (SHo oder UCo) koinzidiert; und

Unterdrückungsmittel zum Unterdrücken eines **durch** das Bestimmungsmittel bestimmten Werts der geforderten Kapazität ($Q_0$) jeder Innenraumeinheit (Y) um einen Betrag, der einer Differenz zwischen dem **durch** das dritte Erfassungsmittel erfaßten Ist-Wert (SH oder UC) und dem **durch** das Zielwerteinstellmittel eingestellten Zielwert (SHo oder UCo) entspricht.

2. Anlage gemäß Anspruch 1, **dadurch gekennzeichnet, daß** das Bestimmungsmittel bestimmt: die geforderte Kapazität ($Q_0$) jeder der Innenraumeinheiten (Y) durch eine Berechnung der für jede der Innenraumeinheiten (Y) eingestellten Kapazität, einen Koeffizienten (A), der der Differenz zwischen der erfaßten Temperatur (Ta) von jedem der Temperaturerfassungsmittel und dem Sollwert (Ts) von jedem der Betriebsmittel (61) entspricht, und einen Kapazitäts-Korrekturkoeffizienten (B) auf der Basis eines Mittelwerts der erfaßten Temperaturen (Ta) des Temperaturerfassungsmittels (39).

3. Anlage gemäß Anspruch 1, **dadurch gekennzeichnet, daß** das zweite Erfassungsmittel erfaßt: eine tatsächliche Kapazität ($Q_1$), die in jeder der Innenraumeinheiten (Y) aufgewiesen wird, in dem die für jede der Innenraumeinheiten (Y) eingestellte Kapazität berechnet wird, und eine Differenz zwischen der erfaßten Temperatur (Teo oder Tco) des ersten Erfassungsmittels und einem Mittelwert der erfaßten Temperaturen (Ta) des Temperaturerfassungsmittels (39).

4. Anlage gemäß Anspruch 1, **dadurch gekennzeichnet, daß** der Kompressor (1) von einem kapazitätsveränderbaren Typ ist.

5. Anlage gemäß Anspruch 4, ferner **gekennzeichnet durch**:

Steuermittel zum Steuern der Kapazität des Kompressors (1) in Übereinstimmung mit einer Differenz zwischen der erfaßten Temperatur (Ta) von jedem der Temperaturerfassungsmittel (39) und dem Sollwert (Ts) von jedem der Betriebsmittel (61).

6. Anlage gemäß Anspruch 4, ferner **gekennzeichnet durch**:

Beurteilungsmittel zum Beurteilen, ob ein Betrag eines in jede der Innenraumeinheiten (Y) fließenden Kühlmittels zufriedenstellend ist oder nicht, auf der Grundlage eines Verhältnisses (Qx) zwischen der geforderten Kapazität ($Q_0$) von jeder der Innenraumeinheiten (Y), die **durch** das Bestimmungsmittel bestimmt wird, und der tatsächlichen Kapazität ($Q_1$) von jeder der Innenraumeinheiten (Y), die **durch** das zweite Erfassungsmittel erfaßt wird, und einem unterdrückten Betrag **durch** das Unterdrückungsmittel; und

Steuermittel zum Korrigieren der Kapazität des Kompressors (1) in Übereinstimmung mit einem Beurteilungsergebnis des Beurteilungsmittels.

7. Anlage gemäß Anspruch 6, **dadurch gekennzeichnet, daß** das Bestimmungsmittel bestimmt: die geforderte Ka-

pazität ($Q_0$) von jeder der Innenraumeinheiten (Y) durch eine Berechnung der für jede der Innenraumeinheiten (Y) eingestellten Kapazität, einen Koeffizienten (A), der der Differenz zwischen der erfaßten Temperatur (Ta) von jedem der Temperaturerfassungsmittel (39) und dem Sollwert (Ts) von jedem der Betriebsmittel (61) entspricht, und einen Kapazitäts-Korrekturkoeffizienten (B) auf der Grundlage eines Mittelwerts der erfaßten Temperaturen (Ta) des Temperaturerfassungsmittels (39).

8. Anlage gemäß Anspruch 6, **dadurch gekennzeichnet, daß** das zweite Erfassungsmittel erfaßt: eine tatsächliche Kapazität ($Q_1$), die in jeder der Innenraumeinheiten (Y) ausgewiesen wird, in dem die für jede der Innenraumeinheiten (Y) eingestellte Kapazität berechnet wird, und eine Differenz zwischen der erfaßten Temperatur (Teo oder Tco) des ersten Erfassungsmittels und einem Mittelwert der erfaßten Temperaturen ($T_2$) des Temperaturerfassungsmittels (39).

## Revendications

1. Appareil de conditionnement d'air dans lequel une pluralité d'unités d'intérieur (Y) sont reliées à une unité d'extérieur (X), ledit appareil étant **caractérisé en ce qu'**il comprend :

   un compresseur (1), prévu dans ladite unité d'extérieur (X) pour décharger un fluide frigorigène ;
   un échangeur de chaleur d'extérieur (8) prévu dans ladite unité d'extérieur (X) ;
   une pluralité de vannes de contrôle de circulation (32), prévues dans chacune de ladite pluralité d'unités d'intérieur (Y), pour contrôler une circulation du fluide frigorigène en modifiant une ouverture de chaque vanne ;
   une pluralité d'échangeurs de chaleur d'intérieur (33) prévus chacun dans chacune de ladite pluralité d'unités d'intérieur (Y) ;
   un cycle de réfrigération pour relier ledit compresseur (1), ledit échangeur de chaleur d'extérieur (8), chacune de ladite pluralité de vannes de contrôle de circulation (32) et chacun de ladite pluralité d'échangeurs de chaleur d'intérieur (33) les uns par l'intermédiaire des autres, pour la circulation du fluide frigorigène ; et
   des moyens de détection de température (39), prévus dans chacune de ladite pluralité d'unités d'intérieur (Y), pour détecter une température (Ta) de l'air intérieur ;

     **caractérisé par**

   des moyens de commande (61), prévus dans chacune desdites unités d'intérieur (Y), pour régler une valeur fixée (Ts) pour la température (Ta) de l'air intérieur ;
   des moyens de réglage d'ouverture pour régler une ouverture de chacune desdites vannes de contrôle de circulation (32) à une ouverture de base correspondant à une différence entre une température détectée (Ta) de chacun desdits moyens de détection de température (39) et une valeur fixée (Ts) de chacun desdits moyens de commande (61) ;
   des moyens de détermination pour déterminer une capacité demandée ($Q_0$) de chacune desdites unités d'intérieur (Y) en fonction de la différence entre la température détectée (Ta) de chacun desdits moyens de détection de température (39) et la valeur fixée (Ts) de chacun desdits moyens de commande (61) ;
   des premiers moyens de détection pour détecter une température d'évaporation de saturation (Teo) ou une température de condensation de saturation (Tco) du fluide frigorigène dans chacun desdits échangeurs de chaleur d'intérieur (33) ;
   des seconds moyens de détection pour détecter une capacité réelle ($Q_1$) présentée dans chacune desdites unités d'intérieur (Y) conformément à la température détectée (Teo ou Tco) des premiers moyens de détection et à la température détectée (Ta) de chacun desdits moyens de détection de température (39) ;
   des moyens de réglage de valeur de consigne pour régler une valeur de consigne (SHo ou UCo) pour un degré de surchauffe ou un degré de sous-refroidissement du fluide frigorigène dans chacun desdits échangeurs de chaleur d'intérieur (33) sur la base d'un rapport (Qx) entre la capacité demandée ($Q_0$) de chaque unité d'intérieur (Y) déterminée par lesdits moyens de détermination et la capacité réelle ($Q_1$) de chaque unité d'intérieur (Y) détectée par lesdits seconds moyens de détection ;
   des troisièmes moyens de détection pour détecter une valeur réelle (SH ou UC) du degré de surchauffe ou du degré de sous-refroidissement du fluide frigorigène dans chacun desdits échangeurs de chaleur d'intérieur (33) ;
   des moyens de correction pour corriger l'ouverture de chacune desdites vannes de contrôle de circulation (32), de sorte que la valeur réelle (SH ou UC) détectée par lesdits troisièmes moyens de détection coïncide avec la valeur de consigne (SHo ou UCo) réglée par lesdits moyens de réglage de valeur de consigne ; et

des moyens de suppression pour supprimer une valeur de la capacité demandée ($Q_0$) de chaque unité d'intérieur (Y) déterminée par lesdits moyens de détermination d'une quantité correspondant à une différence entre la valeur réelle (SH ou UC) détectée par lesdits troisièmes moyens de détection et la valeur de consigne (SHo ou UCo) réglée par lesdits moyens de réglage de valeur de consigne.

2. Appareil selon la revendication 1, **caractérisé en ce que** lesdits moyens de détermination déterminent la capacité demandée ($Q_0$) de chacune desdites unités d'intérieur (Y) par un calcul de la capacité fixée pour chacune desdites unités d'intérieur (Y), un coefficient (A) correspondant à la différence entre la température détectée (Ta) de chacun desdits moyens de détection de température et la valeur fixée (Ts) de chacun des moyens de commande (61), et un coefficient de correction de capacité (B) sur la base d'une valeur moyenne des températures détectées (Ta) desdits moyens de détection de température (39).

3. Appareil selon la revendication 1, **caractérisé en ce que** lesdits seconds moyens de détection détectent une capacité réelle ($Q_1$) présentée dans chacune desdites unités d'intérieur (Y) en calculant la capacité fixée pour chacune desdites unités d'intérieur (Y), et une différence entre la température détectée (Teo ou Tco) des premiers moyens de détection et une valeur moyenne des températures détectées (Ta) desdits moyens de détection de température (39).

4. Appareil selon la revendication 1, **caractérisé en ce que** ledit compresseur (1) est d'un type à capacité variable.

5. Appareil selon la revendication 4, **caractérisé en ce qu'**il comprend, de plus :

   des moyens de contrôle pour contrôler la capacité dudit compresseur (1) conformément à une différence entre la température détectée (Ta) de chacun desdits moyens de détection de température (39) et la valeur fixée (Ts) de chacun des moyens de commande (61).

6. Appareil selon la revendication 4, **caractérisé en ce qu'**il comprend, de plus :

   des moyens d'estimation pour estimer si, oui ou non, une quantité de fluide réfrigérant circulant dans chacune desdites unités d'intérieur (Y) est satisfaisante, sur la base d'un rapport (Qx) entre la capacité demandée ($Q_0$) de chacune desdites unités d'intérieur (Y), déterminée par lesdits moyens de détermination, et la capacité réelle ($Q_1$) de chacune desdites unités d'intérieur (Y) détectée par lesdits seconds moyens de détection, et d'une quantité supprimée par lesdits moyens de suppression ; et
   des moyens de contrôle pour corriger la capacité dudit compresseur (1) conformément à un résultat d'estimation desdits moyens d'estimation.

7. Appareil selon la revendication 6, **caractérisé en ce que** lesdits moyens de détermination déterminent la capacité demandée ($Q_0$) de chacune desdites unités d'intérieur (Y) par un calcul de la capacité fixée pour chacune desdites unités d'intérieur (Y), un coefficient (A) correspondant à la différence entre la température détectée (Ta) de chacun desdits moyens de détection de température (39) et la valeur fixée (Ts) de chacun des moyens de commande (61), et un coefficient de correction de capacité (B) sur la base d'une valeur moyenne des températures détectées (Ta) desdits moyens de détection de température (39).

8. Appareil selon la revendication 6, **caractérisé en ce que** lesdits seconds moyens de détection détectent une capacité réelle ($Q_1$) présentée dans chacune desdites unités d'intérieur (Y) en calculant la capacité fixée pour chacune desdites unités d'intérieur (Y) et une différence entre la température détectée (Teo ou Tco) des premiers moyens de détection et une valeur moyenne des températures détectées ($T_2$) desdits moyens de détection de température (39).

FIG. 1

FIG. 2

START

SET CAPACITY OF COMPRESSOR
IN ACCORDANCE WITH FREQUENCY
COMMAND FROM EACH OF
INDOOR UNITS — 101

CORRECT THE SET CAPACITY OF
COMPRESSOR APPROPRIATELY IN
ACCORDANCE WITH SATISFACTION DEGREE
COMMAND FROM EACH OF INDOOR UNITS — 102

DETERMINE STABLE RANGE CORRECTION
COMMAND IN ACCORDANCE WITH
ZONE JUDGEMENT RESULT — 103

SEND STABLE RANGE CORRECTION
INSTRUCTION — 104

END

# F I G. 3

```
                    ┌─────────────────┐
                    │      START      │
                    └─────────────────┘
                             │
201 ──  ┌────────────────────────────────────────────────────┐
        │              $\Delta T = T_a - T_s$                  │
        └────────────────────────────────────────────────────┘
                             │
202 ──  ┌────────────────────────────────────────────────────┐
        │   SEND FREQUENCY COMMAND IN ACCORDANCE WITH $\Delta T$ │
        └────────────────────────────────────────────────────┘
                             │
203 ──  ┌────────────────────────────────────────────────────┐
        │   SET THE OPENING OF PMV AT THE BASIC OPENING       │
        │   CORRESPONDING TO FREQUENCY COMMAND                │
        └────────────────────────────────────────────────────┘
                             │
204 ──  ┌────────────────────────────────────────────────────┐
        │   DETERMINE REQUEST CAPACITY $Q_0$                   │
        │   ( CORRECT COEFFICIENT A,                          │
        │     NARMELY SUPPRESSING $Q_0$ )                     │
        └────────────────────────────────────────────────────┘
                             │
205 ──  ┌────────────────────────────────────────────────────┐
        │          DETECT $T_{eo}$ (OR $T_{co}$)               │
        └────────────────────────────────────────────────────┘
                             │
206 ──  ┌────────────────────────────────────────────────────┐
        │   OBTAIN ACTUAL CAPACITY $Q_1$ FROM $T_{eo}$ (OR $T_{co}$) │
        │   AND $T_a$                                          │
        └────────────────────────────────────────────────────┘
                             │
207 ──  ┌────────────────────────────────────────────────────┐
        │               $Q_X = Q_0 / Q_1$                     │
        └────────────────────────────────────────────────────┘
                             │
208 ──  ┌────────────────────────────────────────────────────┐
        │   SET $SH_0$ (OR $U C_0$) IN ACCORDANCE WITH $Q_X$  │
        └────────────────────────────────────────────────────┘
                             │
209 ──  ┌────────────────────────────────────────────────────┐
        │              DETECT SH (OR UC)                      │
        └────────────────────────────────────────────────────┘
                             │
210 ──  ┌────────────────────────────────────────────────────┐
        │   DETERMINE ZONE OF DIFFERENCE BETWEEN SH (OR UC)   │
        │   AND $SH_0$ (OR $UC_0$)                             │
        └────────────────────────────────────────────────────┘
                             │
211 ──  ┌────────────────────────────────────────────────────┐
        │          SEND ZONE JUDGEMENT RESULT                 │
        └────────────────────────────────────────────────────┘
                             │
212 ──  ┌────────────────────────────────────────────────────┐
        │   CORRECT THE OPENING OF PMV SO THAT SH (OR UC)     │
        │   AND $SH_0$ (OR $UC_0$)                             │
        └────────────────────────────────────────────────────┘
                             │
213 ──  ┌────────────────────────────────────────────────────┐
        │   DETERMINE SATISFACTION DEGREE COMMAND IN          │
        │   ACCORDANCE WITH $Q_X$ AND STABLE RANGE CORRECTION │
        │   CORRECTION INSTRACTION                            │
        └────────────────────────────────────────────────────┘
                             │
214 ──  ┌────────────────────────────────────────────────────┐
        │        SEND SATISFACTION DEGREE COMMAND             │
        └────────────────────────────────────────────────────┘
                             │
                    ┌─────────────────┐
                    │      END        │
                    └─────────────────┘
```

# F I G.   4

F I G. 5A

EP 0 692 683 B1

CONTINUED

DETERMINE SATISFACTION DEGREE

| INSUFFICIENT | SATISFACTORY | EXCESSIRE |

JUDGE FLOW AMOUNT OF REFRIGERANT (ZONE L,M,H)

FREQUENCY COMMAND

OUTPUT

OUTPUT INPUT OUTPUT

INDOOR CONTROLLER

60

OUTDOOR CONTROLLER

50

OUTDOOR UNIT

X

1.2

INPUT

| INSUFFICIENT (Hz·UP) | SATISFACTORY (Hz·HOLD) | EXCESSIRE (Hz·HOLD) |

INPUT

PERFORMANCE HOMOGENIZING CONTROL DATA

LIMITATION TO $Q_0$

OUTPUT

INPUT

FREQUENCY COMMAND

52

CORRECTION DATA FOR CAPACITY OF COMPRESSOR

INVERTER

COMPRESSOR

F I G.　5B